# EUROPEAN PATENT APPLICATION

(11) **EP 3 509 185 A1**
(43) Date of publication of application: **10.07.2019**
(21) Application number: 17846692.6
(22) Date of filing: 01.09.2017
(51) Int. Cl.: H02J 13/00, H02J 3/32, H02J 3/38

(54) **ELECTRIC POWER MANAGEMENT METHOD, ELECTRIC POWER MANAGEMENT SERVER, LOCAL CONTROL DEVICE, AND ELECTRIC POWER MANAGEMENT SYSTEM**

(30) Priority: 01.09.2016 JP 2016171023
(71) Applicant: Kyocera Corporation, Kyoto-shi Kyoto 612-8501 (JP)
(72) Inventor: NAKAMURA, Kazutaka, Kyoto-shi Kyoto 612-8501 (JP)
(74) Representative: TBK
(86) International application number: PCT/JP2017/031513
(87) International publication number: WO 2018/043689

(57) **Abstract**

A power management method incudes the steps of: (A) transmitting a power command message controlling a distributed power supply individually provided in each of a plurality of facilities from a power management server configured to manage the facilities to a local control apparatus individually provided in each of the facilities; and (B) selecting, by the local control apparatus, a restoration operation state of the distributed power supply after the control by the power command message is ended, in which the restoration operation state is any one of an operation state of the distributed power supply before the control by the power command message is started, a standby operation state of the distributed power supply, an operation state of the distributed power supply designated by the power management server, and an operation state of the distributed power supply designated by the power command message.

## Description

### TECHNICAL FIELD

The present disclosure relates to a power management method, a power management server, a local control apparatus, and a power management system.

### BACKGROUND ART

In recent years, to maintain a power supply-demand balance of a power grid, a technology for suppressing a power flow rate from the power grid to a facility or a reverse power flow from the facility to the power grid is known (for example, Patent Documents 1 and 2).

In addition, a system that uses distributed power supplies provided in a plurality of facilities as a power source for supplying power to the power grid (hereinafter, referred to as VPP; Virtual Power Plant) attracts attention. In the VPP, it is necessary to share the power among a plurality of facilities, and a power management server for managing such power share is necessary.

### PRIOR ART DOCUMENT

### PATENT DOCUMENT

Patent Document 1: Japanese Application Publication No. 2013-169104
Patent Document 2: Japanese Application Publication No. 2014-128107

### SUMMARY OF THE INVENTION

In the VPP, the power management server transmits a power command message for controlling the distributed power supply. However, it has just begun to discuss a control of the distributed power supply by transmitting the power command message.

Accordingly, the present disclosure provides a power management method of appropriately managing a distributed power supply, a power management server therefor, a local control apparatus therefor, and a power management system therefor.

A power management method according to a first disclosure comprises steps of: (A) transmitting a power command message controlling a distributed power supply individually provided in each of a plurality of facilities, from a power management server configured to manage the plurality of facilities to a local control apparatus individually provided in each of the plurality of facilities; and (B) selecting, by the local control apparatus, a restoration operation state of the distributed power supply after the control by the power command message is ended. The restoration operation state includes at least one of an operation state of the distributed power supply before the control by the power command message is started, a standby operation state of the distributed power supply, an operation state of the distributed power supply designated by the power management server, and an operation state of the distributed power supply designated by the power command message.

A power management server according to a second disclosure manages a plurality of facilities. The power management server comprises a transmitter configured to transmit a power command message controlling a distributed power supply provided individually in each of the plurality of facilities to a local control apparatus individually provided in each of the plurality of facilities. The transmitter transmits a restoration operation message including information designating a restoration operation state of the distributed power supply after the control by the power command message is ended.

A local control apparatus according to a third disclosure controls a distributed power supply provided in a target facility being one of a plurality of facilities managed by a power management server. The local control apparatus comprises a receiver configured to receive a power command message controlling the distributed power supply from the power management server; and a controller configured to select a restoration operation state of the distributed power supply after the control by the power command message is ended. The restoration operation state is one of an operation state of the distributed power supply before the control by the power command message is started, a standby operation state of the distributed power supply, an operation state of the distributed power supply designated by the power management server, and an operation state of the distributed power supply designated by the power command message.

A power management system according to a fourth disclosure comprises a power management server configured to manage a plurality of facilities; and a local control apparatus provided individually in each of the plurality of facilities. The power management server includes a transmitter configured to transmit a power command message for controlling a distributed power supply provided individually in each of the plurality of facilities. The local control apparatus includes a controller configured to select a restoration operation state of the distributed power supply after the control by the power command message is ended. The restoration operation state is one of an operation state of the distributed power supply before the control by the power command message is started, a standby operation state of the distributed power supply, an operation state of the distributed power supply designated by the power management server, and an operation state of the distributed power supply designated by the power command message.

According to one aspect, it is possible to provide a power management method of appropriately managing a distributed power supply, a power management server therefor, a local control apparatus therefor, and a power management system therefor.

### BRIEF DESCRIPTION OF THE DRAWINGS

Fig. 1 is a diagram illustrating a power management system 1 according to an embodiment.
Fig. 2 is a diagram illustrating a power management server 300 according to the embodiment.
Fig. 3 is a diagram illustrating a local control apparatus 400 according to the embodiment.
Fig. 4 is a diagram illustrating a power management method according to the embodiment.
Fig. 5 is a diagram illustrating a power management method according to a first modification.

### DESCRIPTION OF THE EMBODIMENT

An embodiment will be described with reference to the drawings, below. It is noted that, in the following description of the drawings, identical or like numerals and symbols are assigned to identical or like parts.

However, it should be noted that the drawings are schematically illustrated and the ratio and the like of each dimension may be different from the real ones. Accordingly, specific dimensions and the like should be finalized in consideration of the explanation below. Further, naturally, among the drawings, the dimensional relationship or ratio may be different.

### [Embodiment]

### (Power Management System)

A power management system according to an embodiment will be described, below. In the embodiment, a system using a fuel cell apparatus 140 (141) provided in a facility 100 as a distributed power supply capable of supplying power to at least a load or a power grid (hereinafter, VPP; Virtual Power Plant) is utilized as an example.

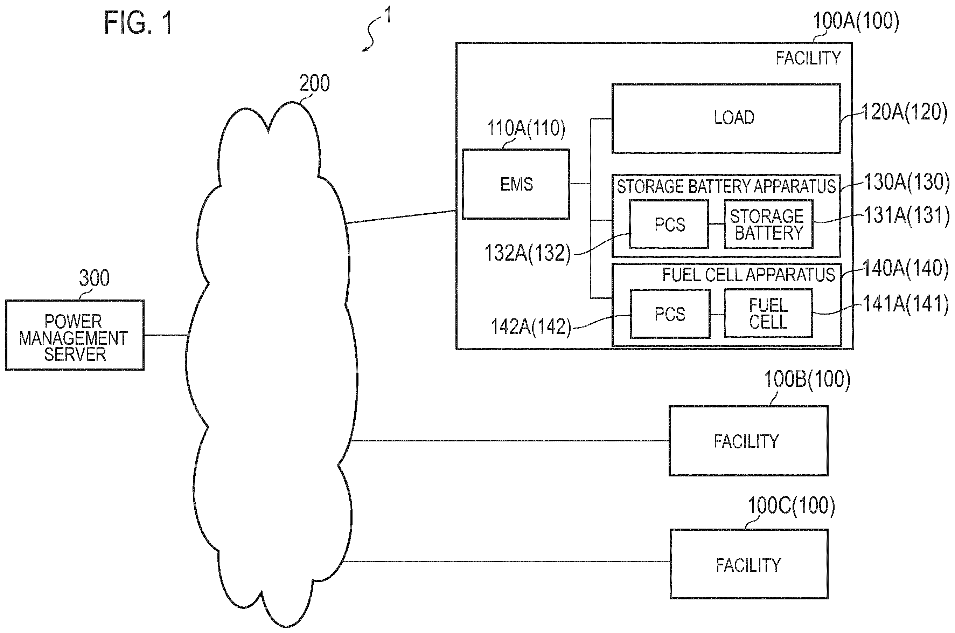

As illustrated in Fig. 1, the power management system 1 includes the facility 100, a network 200, and a power management server 300. In the embodiment, facilities 100A to 100C are exemplified as the facility 100. However, the facility 100B and the facility 100C are similar in configuration to the facility 100A, and thus, only the facility 100A will be described here. The facility 100 includes an EMS 110, a load 120, a storage battery apparatus 130, and the fuel cell apparatus 140.

The EMS 110 is an apparatus (HEMS: Home Energy Management System) configured to manage power of equipment provided in the facility 100. The EMS 110 may be a cloud server via the network 200. The EMS 110 is an example of a local control apparatus and is an example of a virtual end node (VEN) apparatus.

The load 120 is an equipment or an appliance that consumes power. The load 120 includes an equipment or an appliance such as a refrigerator, a freezer, a lighting, an air conditioner, or a television. The load 120 may include a single equipment or appliance, and may include a plurality of equipments and appliances.

The storage battery apparatus 130 is an example of a distributed power supply used for the VPP. The storage battery apparatus 130 has a storage battery 131 and a PCS 132. The storage battery 131 is an apparatus configured to charge power or discharge power. The PCS 132 is an apparatus (Power Conditioning System) configured to convert a direct current (hereinafter, DC) power discharged from the storage battery 131 into an alternating current (hereinafter, AC) power and convert the AC power into DC power to be charged into the storage battery 131.

The fuel cell apparatus 140 is an example of a distributed power supply used for the VPP. The fuel cell apparatus 140 has a fuel cell 141 and a PCS 142. The fuel cell 141 is an equipment using a fuel gas to generate power. The PCS 142 is an apparatus (Power Conditioning System) configured to convert DC power output from the fuel cell 141 into the AC power. An exhaust heat of the fuel cell 141 may be used to maintain or increase an amount of water (hot water) stored in a hot water tank, or may be used to maintain or raise a temperature of the water (hot water) stored in the hot water tank.

Here, the fuel cell apparatus 140 (fuel cell 141) may be any one of a Solid Oxide Fuel Cell (hereinafter, SOFC), a Polymer Electrolyte Fuel Cell (hereinafter, PEFC), a Phosphoric Acid Fuel Cell (hereinafter, PAFC), and a Molten Carbonate Fuel Cell (hereinafter, MCFC).

The network 200 is a communication line connecting the facility 100 and the power management server 300. The network 200 may be, for example, a public line such as the Internet or a mobile communication network or a dedicated line such as a VPN (Virtual Private Network). For the public line, for example, a line of a B route not passing through a smart meter provided in the facility 100 may be used. For the dedicated line, a line of an A route passing through the smart meter provided in the facility 100 may be used. The smart meter is a power meter managed by a power generation company such as a power company and used for charging the power used in the facility 100 or calculating an incentive for power to be sold. A plurality of smart meters may be installed in the facility 100.

The power management server 300 is a server managed by a business entity such as a power generation company, a power transmission and distribution business operator, or a retailer. The power management server 300 may be managed by an aggregator corresponding to the power transmission and distribution business operator or the retailer. The aggregator is a business entity for managing a power supply-demand balance at the facility 100 contracted with the aggregator. The aggregator may be entrusted with management of the power supply-demand balance from the power generation company such as a power company. The power management server 300 is an example of a virtual top node (VTN) apparatus.

The power management server 300 may transmit a power command message for controlling the distributed power supply provided in the facility 100. The power command message may be a power control message for requesting control of an operation of the distributed power supply installed in the facility 100. The power command message may be a power flow control message for requesting control of (to increase, to decrease, or to maintain) a power flow rate from a power grid to the facility 100, and a reverse power flow control message for requesting control of (to increase, to decrease, or to maintain) a reverse power flow rate from the facility 100 to the power grid.

An original format or a format that complies with an automated demand response (ADR) may be employed for a format of the power command message. More specifically, a scheme that complies with the OpenADR 2.0 standard can be employed for the power command message.

### (Power management server)

The power management server according to the embodiment will be described, below.

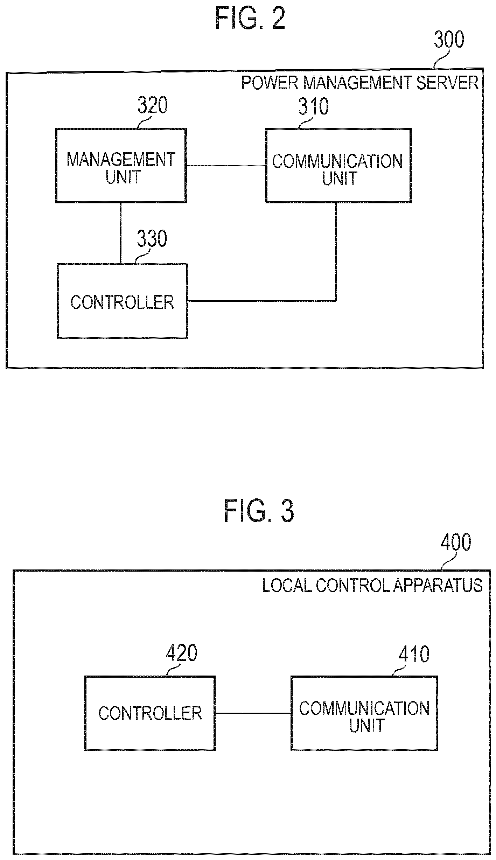

As illustrated in Fig. 2, the power management server 300 includes a communication unit 310, a management unit 320, and a controller 330.

The communication unit 310 includes a communication module and the like and performs communication with the facility 100. For example, the communication unit 310 transmits the power command message to the facility 100. The communication unit 310 receives distributed power supply information described later from the facility 100.

The management unit 320 is configured of a nonvolatile memory and/or a storage medium such as an HDD, and manages a plurality of facilities 100 connected to the power grid.

The controller 330 is configured of a CPU, a memory, and the like, and controls the communication unit 310 and the management unit 320. The controller 330 adjusts a power supply-demand balance as a whole of the plurality of facilities 100 managed by the management unit 320.

In the embodiment, the power command message may include, in addition to designating an operation state, a continuation condition to continue the control by the power command message. If the distributed power supply is the storage battery apparatus 130, the continuation condition includes a timewise condition (from XX:XX to XX:XX), a discharge condition (until XX kWh of power is discharged or until a power storage residual quantity falls below XX kWh), and a charge condition (until XX kWh of power is charged or until a power storage residual quantity exceeds XX kWh). The timewise condition and the discharge condition may be combined, and the timewise condition and the charge condition may be combined. The timewise condition may be designated by a duration time (or a remaining time) from a reception of the power command message, may be designated by a duration time (or a remaining time) from a predetermined start timepoint, or may only designate an end timepoint. In such a case, the discharge condition and the charge condition may be designated in kW. If the distributed power supply is the fuel cell apparatus 140, the continuation condition includes a timewise condition (from XX:XX to XX:XX), and a hot water amount control condition (until a hot water amount reaches a target hot water amount, until a hot water temperature reaches a target hot water temperature). The timewise condition and the hot water amount control condition may be combined. The timewise condition may be designated by a duration time (or a remaining time) from a reception of the power command message, may be designated by a duration time (or a remaining time) from a predetermined start timepoint, or may only designate an end timepoint.

In the embodiment, the controller 330 may designate a restoration operation state of the distributed power supply after the control by the power command message is ended, based on the distributed power supply information. The control of the distributed power supply by the power command message is executed from the power management server, whereas the control of the restoration operation state is executed from the local control apparatus. Therefore, the restoration operation state is to determine what kind of control is to be performed when a control period of the distributed power supply by the power command message ends. The controller 330 instructs the communication unit 310 to transmit a restoration operation message including information designating the restoration operation state. The Information designating the restoration operation state may be included in the power command message. That is, the power command message may also serve as the restoration operation message.

Here, the restoration operation state includes at least any one of an operation state of the distributed power supply before the control by the power command message is started, a standby operation state of distributed power supply, an operation state of the distributed power supply designated by the power management server 300, and an operation state of distributed power supply designated by the power command message. If the distributed power supply is the storage battery apparatus 130, the standby operation state may be any state where the storage battery apparatus 130 performs neither charging nor discharging. If the distributed power supply is the fuel cell apparatus 140, the standby operation state is a state where the fuel cell apparatus 140 stops the power generation (hereinafter, "stopped state"). The stopped state may be an operation state where the operation of the fuel cell apparatus 140 is completely stopped (complete stopped state), and an operation state (idling state) where a chemical reaction is performed to maintain the temperature of the fuel cell apparatus 140 at a predetermined temperature.

In addition, the restoration operation state may be associated with timer information including a duration time of the restoration operation state (time until an end of the restoration operation state) or an end timepoint. The timer information may be included in information designating the restoration operation state. After the expiration of a timer, the operation state of the distributed power supply may be returned to the operation state of the distributed power supply before the control by the power command message is started. The timer information may be previously determined.

### (Local control apparatus)

The local control apparatus according to the embodiment will be described, below. It suffices that the local control apparatus is to control the fuel cell apparatus 140 within the facility 100. The local control apparatus may be the aforementioned EMS 110, the aforementioned PCS 132, and the aforementioned PCS 142. The local control apparatus may be configured by both the EMS 110 and the PCS 132, or may be configured by both the EMS 110 and the PCS 142. As illustrated in Fig. 3, the local control apparatus 400 includes a communication unit 410 and a controller 420.

The communication unit 410 includes a communication module and the like, and performs communication with the power management server 300. For example, the communication unit 410 receives the power command message from the power management server 300. The communication unit 410 transmits distributed power supply information described later to the power management server 300.

The controller 420 is configured of a CPU, a memory, and the like, and controls the communication unit 410. The controller 420 controls the fuel cell apparatus 140 within the facility 100.

In the embodiment, the controller 420 selects the restoration operation state of the distributed power supply after the control by the power command message is ended. As described above, the restoration operation state is any one of the operation state of the distributed power supply before the control by the power command message is started, the standby operation state of distributed power supply, and the operation state of the distributed power supply designated by the power command message.

The controller 420 may instruct the communication unit 410 to transmit the distributed power supply information. The distributed power supply information is information used for designating the restoration operation state, and includes, for example, at least any one of specification information of the distributed power supply, identification information of the distributed power supply, and setting information of the distributed power supply.

The specification information of the distributed power supply is a rated power of the distributed power supply, for example. The rated power of the distributed power supply is power (kW) or a power amount (kWh) that can be discharged or charged by the storage battery apparatus 130 and output power (kW) or a power amount (kWh) of the fuel cell apparatus 140, for example. The rated power may be a recommended upper limit (for example, a catalog value) of discharging power or charging power determined by a manufacturer of either the storage battery 131 or the PCS 132. The rated power may be a recommended upper limit (for example, a catalog value) of the generated power determined by a manufacturer of either the fuel cell 141 or the PCS 142. The rated power may be represented by AC power or DC power. If the distributed power supply is the storage battery apparatus 130, the specification information may be at least any one of a total capacity of the storage battery 131, a lower limit SOC (State of Charge) of the storage battery apparatus 130, an upper limit SOC thereof, an unusable capacity for protecting the storage battery 131, and a BCP (Business Continuity Plan) capacity to cope with emergency situations such as disasters.

The identification information of the distributed power supply is information indicating whether the distributed power supply is the storage battery apparatus 130 or the fuel cell apparatus 140, whether the storage battery apparatus 130 is a fixed type storage battery apparatus or EV (Electric Vehicle), and whether the fuel cell apparatus 140 is any one of SOFC, PEFC, PAFC or MCFC, for example. The identification information of the distributed power supply includes a model name of the distributed power supply, a manufacturer code, a manufacturing code, or a character string or a numeric string in combination thereof, or a combination thereof.

The setting information of the distributed power supply includes any one of the operation state of the distributed power supply, the continuation condition of the operation state, and other setting information. If the distributed power supply is the storage battery apparatus 130, the operation state is a discharge state, a charge state, and a standby state. The continuation condition includes a timewise condition (from NN:NN to NN:NN), a discharge condition (until NN kWh of power is discharged, until a power storage residual quantity falls below NN kWh), and a charge condition (until NN kWh of power is charged, until a power storage residual quantity exceeds NN kWh). The timewise condition and the discharge condition may be combined, and the timewise condition and the charge condition may be combined. The timewise condition may be designated by a duration time (or a remaining time) from a reception of the power command message, may be designated by a duration time (or a remaining time) from a predetermined start timepoint, or may only designate an end timepoint. In such a case, the discharge condition and the charge condition may be designated in kW. In such a case, the discharge condition and the charge condition may be designated in kW. The other setting information is information indicating whether the aforementioned lower limit SOC, upper limit SOC, and BCP are set, whether it is permitted to boost the power to be sold, by the power discharged from the storage battery apparatus 130, and whether the reverse power flow from the storage battery apparatus 130 to the power grid is permitted. If the distributed power supply is the fuel cell apparatus 140, the operation state is a power generation state and the stopped state. The power generation state includes a state where the power is generated with constant power and a state where the power is generated to follow a power consumption of the load 120. The stopped state includes a complete stopped state and an idling state. The continuation condition includes a timewise condition (from NN:NN to NN:NN), and a hot water amount control condition (until a hot water amount reaches a target hot water amount, until a hot water temperature reaches a target hot water temperature). The timewise condition and the hot water amount control condition may be combined. The timewise condition may be designated by a duration time (or a remaining time) from a reception of the power command message, may be designated by a duration time (or a remaining time) from a predetermined start timepoint, or may only designate an end timepoint. The other setting information is information as to whether or not the reverse power flow from the fuel cell apparatus 140 to the power grid is permitted.

### (Power management method)

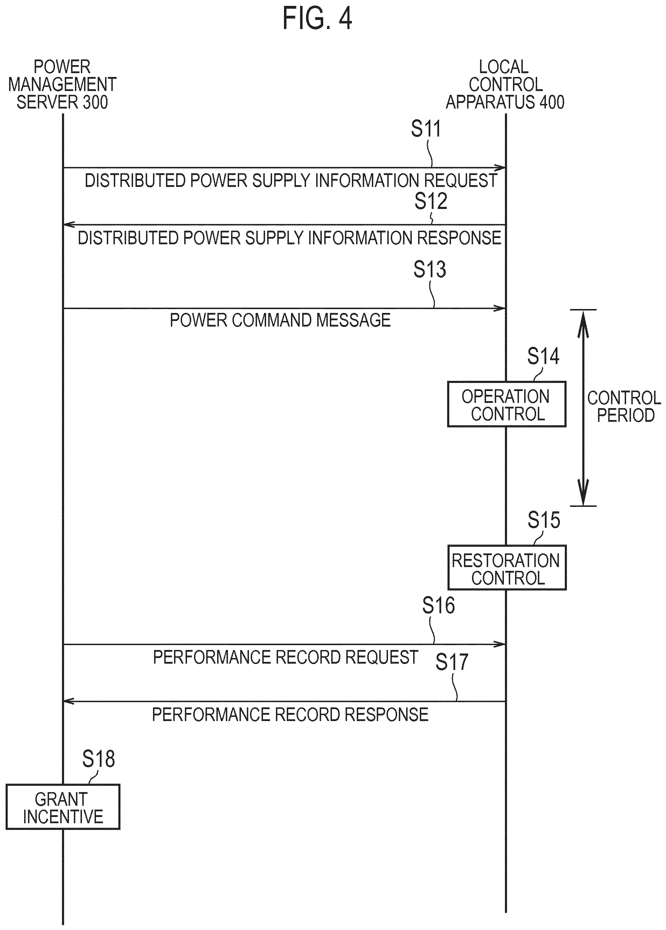

A power management method according to the embodiment will be described, below. In Fig. 4, only the one local control apparatus 400 is illustrated, but actually, a plurality of local control apparatuses 400 may be present.

In step S11, the power management server 300 transmits a message (distributed power supply information request) requesting the distributed power supply information, to the local control apparatus 400.

In step S12, the local control apparatus 400 transmits a message (distributed power supply information response) including the distributed power supply information, to the power management server 300. The distributed power supply information is information used for designating the restoration operation state, and includes, for example, at least any one of specification information of the distributed power supply, identification information of the distributed power supply, and setting information of the distributed power supply.

In step S13, the power management server 300 transmits the power command message to the local control apparatus 400 to adjust the power supply-demand balance as a whole of the plurality of facilities 100.

In step S14, the local control apparatus 400 controls the operation state of the distributed power supply, in accordance with the power command message. The local control apparatus 400 continues the control by the power command message until the control period expires. In the example illustrated in Fig. 4, the power command message includes information designating the restoration operation state.

In step S15, after the control period ends, the local control apparatus 400 restores the operation state of the distributed power supply, based on the restoration operation state designated by the power command message. The end of the control period is determined based on the continuation condition included in the power command message.

In step S16, the power management server 300 transmits a message (performance record request) requesting an operation control performance record of the fuel cell apparatus 140, to the local control apparatus 400.

In step S17, the local control apparatus 400 transmits a message (performance record response) including the operation control performance record of the fuel cell apparatus 140, to the power management server 300.

In step S18, the power management server 300 imparts an incentive accompanying a local operation plan change optimized within the facility 100. The incentive may be a monetary compensation, may be a compensation by way of an intangible item such as a gift certificate or a coupon, or may be a compensation by way of a tangible object such as a prize.

### (Operation and effect)

In the embodiment, the local control apparatus 400 selects the information designating the restoration operation state after the control by the power command message is ended. Accordingly, for example the below two possibility could be reduced: possibility that the operation state of the distributed power supply is completely controlled due to power command messages frequently transmitted from the power management server 300; and possibility that power supply-demand balance is collapsed due to a control in conflict with the power command message arbitrarily executed by the local control apparatus 400.

In the embodiment, the restoration operation state may be designated, based on the distributed power supply information. With such a configuration, for example, it is possible to determine a magnitude of an influence on power supply-demand balance given by the distributed power supply.

### [First Modification]

A first modification of the embodiment will be described, below. A difference from the embodiment will be described, below.

In the embodiment, the power command message also serves as the restoration operation message. On the other hand, in the first modification, in addition to the power command message, the restoration operation message is transmitted.

### (Power management method)

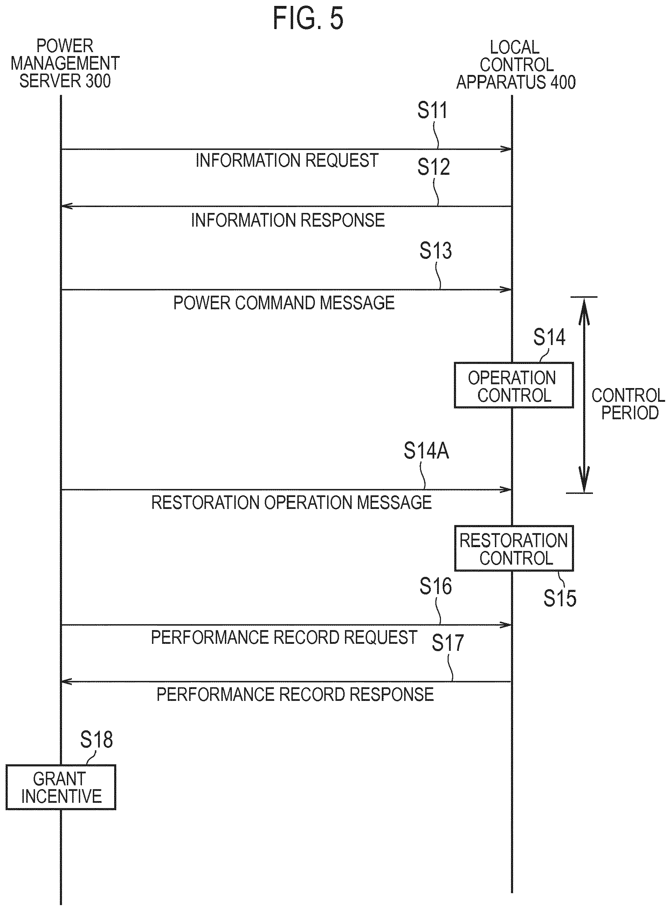

A power management method according to the embodiment will be described, below. In Fig. 5, processes similar to those in Fig. 4 are allotted with similar step numbers. the processes similar to those in Fig. 4 will not be described.

As illustrated in Fig. 5, in step S14A, the power management server 300 transmits, in addition to the power command message, the restoration operation message including information designating the restoration operation state, to the local control apparatus 400. A timing for transmitting the restoration operation message is not particularly limited. The restoration operation message may be transmitted before the power command message is transmitted, and the restoration operation message may be transmitted after the power command message is transmitted. The restoration operation message may be transmitted before the control period is ended.

### [Second Modification]

A second modification of the embodiment will be described, below. A difference from the embodiment will be described, below.

In the embodiment, the restoration operation state is designated by the power management server 300. On the other hand, in the second modification, the restoration operation state is previously determined. As a method of previously setting the restoration operation state, a method of previously setting by a user input may be used. It is noted that a method of setting the restoration operation state by transmitting the restoration operation message before the power command message is transmitted may be considered as a method of previously setting the restoration operation state.

As in the embodiment, the restoration operation state may be previously determined, based on at least any one of the specification information of the distributed power supply, the identification information of the distributed power supply, and the setting information of the distributed power supply. In such a case, a corresponding relationship between: at least any one of the specification information, the identification information, and the setting information; and the restoration operation state is previously determined.

### [Other Embodiments]

The present invention has been described according to the embodiment set forth above; however, the invention should not be understood to be limited by the statements and the drawings constituting a part of this disclosure. From this disclosure, various alternative embodiments, examples, and operational technologies will become apparent to those skilled in the art.

Although not particularly limited, in Fig. 4 and Fig. 5, the local control apparatus 400 may periodically transmit a polling signal to the power management server 300. In response to reception of the polling signal, the power management server 300 transmits various types of messages to the local control apparatus 400. The local control apparatus 400 may autonomously transmit the message to the power management server 300 even without receiving the request from the power management server 300.

Although not particularly limited, the communication between the power management server 300 and the local control apparatus 400 may be performed in a scheme that complies with the Open ADR standard. In such a case, for example, ordrPoll can be used as the polling signal. As the power command message, for example, oadrDistributeEvent can be used. TELEMETRY USAGE and TELEMETRY STATUS can be used as the distributed power supply information response and the performance record response.

Although not particularly limited, the flow illustrated in Fig. 4 and Fig. 5 may be performed regularly. "Regularly" may mean once/n days (n is an integer of 0 or more), and once/n hours (n is an integer of 0 or more), for example. The flow illustrated in Fig. 4 and Fig. 5 may be performed in response to occurrence of a predetermined event. The predetermined event may be an event that the power supply-demand balance is collapsed in a management area managed by the power management server 300, an event that the power supply-demand balance is collapsed in a wide area wider than the management area, and a natural disaster.

Although not particularly limited, the aforementioned "power" may be an instantaneous value (kW). The aforementioned "power" may be read as a power amount (kWh) if a concept of a time is involved.

Although not particularly limited, an information element necessary to designate the restoration operation state may not be necessarily transmitted from the local control apparatus 400. For example, the information indicating at least any one of the specification information of the distributed power supply, the identification information of the distributed power supply, and the setting information of the distributed power supply may be previously registered in the power management server 300 upon installation application of the distributed power supply and the like.

The present application claims priority of Japanese Patent Application No. 2016-171023 (filed on September 1, 2016), and the entire content thereof is incorporated herein.

## Claims

1. A power management method comprising steps of:
(A) transmitting a power command message controlling a distributed power supply individually provided in each of a plurality of facilities, from a power management server configured to manage the plurality of facilities to a local control apparatus individually provided in each of the plurality of facilities; and
(B) selecting, by the local control apparatus, a restoration operation state of the distributed power supply after the control by the power command message is ended, wherein
the restoration operation state includes at least one of an operation state of the distributed power supply before the control by the power command message is started, a standby operation state of the distributed power supply, an operation state of the distributed power supply designated by the power management server, and an operation state of the distributed power supply designated by the power command message.

2. The power management method according to claim 1, comprising a step of:
(C) transmitting a restoration operation message including information designating the restoration operation state from the power management server to the local control apparatus.

3. The power management method according to claim 2, wherein
the restoration operation message is transmitted while a power command included in the power command message is being executed.

4. The power management method according to claim 2, wherein
the restoration operation message is transmitted before the power command message.

5. The power management method according to claim 1 or claim 2, wherein
the power command message includes information designating the restoration operation state.

6. The power management method according to any one of claims 2 and 3 to 5 reciting claim 2, comprising steps of:
(D) transmitting distributed power supply information including at least one of specification information of the distributed power supply, identification information of the distributed power supply, and setting information of the distributed power supply, from the local control apparatus to the power management server; and
(E) designating, by the power management server, the restoration operation state, based on the distributed power supply information.

7. The power management method according to claim 1, wherein the restoration operation state is previously determined.

8. The power management method according to claim 7, wherein
the restoration operation state is previously determined based on at least one of the specification information of the distributed power supply, the identification information of the distributed power supply, and the setting information of the distributed power supply.

9. The power management method according to any one of claims 1 to 8, wherein
the restoration operation state is associated with timer information including a duration time or an end timepoint of the restoration operation state.

10. A power management server configured to manage a plurality of facilities, comprising:
a transmitter configured to transmit a power command message controlling a distributed power supply provided individually in each of the plurality of facilities to a local control apparatus individually provided in each of the plurality of facilities, wherein
the transmitter is configured to transmit a restoration operation message including information designating a restoration operation state of the distributed power supply after the control by the power command message is ended.

11. A local control apparatus configured to control a distributed power supply provided in a target facility being one of a plurality of facilities managed by a power management server, comprising:
a receiver configured to receive a power command message controlling the distributed power supply from the power management server; and
a controller configured to select a restoration operation state of the distributed power supply after the control by the power command message is ended, wherein
the restoration operation state is one of an operation state of the distributed power supply before the control by the power command message is started, a standby operation state of the distributed power supply, an operation state of the distributed power supply designated by the power management server, and an operation state of the distributed power supply designated by the power command message.

12. A power management system comprising:
a power management server configured to manage a plurality of facilities; and
a local control apparatus provided individually in each of the plurality of facilities, wherein
the power management server includes a transmitter configured to transmit a power command message for controlling a distributed power supply provided individually in each of the plurality of facilities,
the local control apparatus includes a controller configured to select a restoration operation state of the distributed power supply after the control by the power command message is ended, and
the restoration operation state is one of an operation state of the distributed power supply before the control by the power command message is started, a standby operation state of the distributed power supply, an operation state of the distributed power supply designated by the power management server, and an operation state of the distributed power supply designated by the power command message.
